# EUROPÄISCHE PATENTSCHRIFT

(11) **EP 3 859 112 B1**
(45) Veröffentlichungstag und Bekanntmachung des Hinweises auf die Patenterteilung: **18.09.2024**
(21) Anmeldenummer: 20154061.4
(22) Anmeldetag: 28.01.2020
(51) Int. Cl.: E05F 15/44, H01H 3/14

(54) **ELASTISCH NACHGIEBIGES HOHLPROFIL MIT EINER IN EINER KAMMER DES HOHLPROFILS FEST INTEGRIERTEN ELEKTRISCH ARBEITENDEN SCHALTLEISTE**
ELASTICALLY FLEXIBLE HOLLOW PROFILE WITH AN ELECTRICAL SWITCHING STRIP INTEGRATED INTO A CHAMBER OF THE HOLLOW PROFILE
PROFILÉ CREUX À DÉFORMATION ÉLASTIQUE DOTÉ D'UNE BAGUETTE DE COMMUTATION FONCTIONNANT ÉLECTRIQUEMENT INTÉGRÉE D MANIÈRE FIXE DANS UNE CHAMBRE DU PROFILÉ CREUX

(43) Veröffentlichungstag der Anmeldung: 04.08.2021
(73) Patentinhaber: Hübner GmbH & Co. KG, 34123 Kassel (DE)
(72) Erfinder: Pogorelow, Wjatscheslaw, 34537 Bad Wildungen (DE); Franck, Katharina, 34317 Habichtswald (DE)

(56) Entgegenhaltungen:
- DE-A1- 102012 101 543
- DE-A1- 102012 214 289

## Beschreibung

Die Erfindung betrifft ein elastisch nachgiebiges Hohlprofil mit einer Schaltleiste mit den Merkmalen des Oberbegriffs von Anspruch 1.

### STAND DER TECHNIK

Ein Hohlprofil der eingangs genannten Art mit einer Schaltleiste ist auch unter dem Begriff "Fingerschutzprofil" bekannt. Solche Fingerschutzprofile finden Anwendung an Türen von Fahrzeugen des öffentlichen Personentransportes, beispielsweise von Schienenfahrzeugen aber auch von Bussen. Das Fingerschutzprofil erstreckt sich üblicherweise im Wesentlichen über den im Einbauzustand der Tür vertikalen Bereich der Türkante und ist dort durch ein Rahmenprofil mit der Tür verbunden. Dieses Fingerschutzprofil sorgt dafür, dass die Schaltleiste bei Verformung des Hohlprofils aktiviert wird, wobei die Schaltleiste mit einer Steuerung für einen Motor zum Öffnen und Schließen der Tür in Verbindung steht. Bei Aktivierung der Schaltleiste durch einen eingeklemmten Gegenstand wird die Tür geöffnet.

Aus dem Stand der Technik gemäß der DE 10 2017 223 660 A1 ist in diesem Zusammenhang ein Hohlprofil mit einer Schaltleiste bekannt, wobei die Schaltleiste eine aus einem Elastomer hergestellte Hohlkammer aufweist, die der Aufnahme zweier Leiter dient, die sich längs der Hohlkammer erstrecken. Die in der Hohlkammer angeordneten Leiter weisen einen Abstand zueinander auf. Der Mantel der Hohlkammer ist des Weiteren durch Stege mit der Innenseite des Hohlprofils verbunden. Zur Konfektionierung des Hohlprofils ist vorgesehen, die Stege über einen gewissen Teil ihrer Länge zu entfernen, um ein Abschlussbauteil auf das jeweilige Ende des Hohlprofils aufzusetzen, wobei das Abschlussbauteil nicht nur den Mantel der Hohlkammer umgibt, sondern auch in den Raum zwischen den beiden Leitern der Schaltleiste ragt. Im Bereich dieses Abschlussbauteils ist das Fingerschutzprofil nicht sensitiv oder taktil.

Eine ähnliche Ausgestaltung eines elastisch nachgiebigen Hohlprofils ist aus der EP 2 629 312 A1 bekannt. Auch hier ist zur Aufnahme durch das Hohlprofil ein Abschlussbauteil bekannt, das auf den Mantel der Schaltleiste aufgeschoben werden kann. Das Abschlussbauteil wird hierbei nicht nur auf das eine stirnseitige Ende des Hohlprofils aufgesetzt, sondern kann, gegebenenfalls mit einem Endwiderstand versehen, auch auf das andere gegenüberliegende Ende des Hohlprofils aufgesetzt werden. Auch hier gilt, dass das Hohlprofil im Bereich der Abschlussbauteile am oberen bzw. unteren Ende nicht über seine gesamte Länge sensibel ist, mithin im oberen und unteren Bereich Abschnitte aufweist, die nicht als Einklemmschutz dienen können.

In diesem Zusammenhang ist aus der DE 196 32 592 C1 ein Hohlprofil mit einer darin angeordneten integrierten Schaltleiste bekannt, wobei der verformbare Bereich des Hohlprofils an beiden Enden mit abgeschrägten Endflächen versehen ist, sodass sich in Bezug auf den verformbaren Bereich des Hohlprofils eine trapezförmige Ausgestaltung des Hohlprofils über seine Länge ergibt. Durch diese trapezförmige Ausgestaltung des Hohlprofils wird erreicht, dass wenn im Bereich des überstehenden Endes des trapezförmigen Hohlprofils eine Krafteinwirkung erfolgt, das Fingerschutzprofil dennoch aktiviert wird, da die Krafteinwirkung in einen zwischen den nicht sensiblen Endbereichen liegenden Abschnitt der Schaltleiste geleitet wird.

Nachteilig an diesem Stand der Technik ist allerdings, dass durch den Überstand eines Teils des Hohlprofils mit der in dem Hohlprofil angeordneten Schaltleiste die Schaltleiste nicht sicher gegen eindringende Feuchtigkeit isoliert werden kann, weil die Schaltleiste sich noch in dem restlichen überstehenden Hohlprofil befindet.

Weiter ist aus dem Dokument DE 10 2012 101 543 A1 ein Herstellungsverfahren für ein Hohlprofil mit einer darin angeordneten Schaltleiste bekannt. Für eine Befestigung des Hohlprofils an einem Trägerarm wird integral mit dem Hohlprofil ein sich in Längsrichtung erstreckender Befestigungsabschnitt ausgebildet. Bei dem Herstellungsverfahren wird im Endbereich des Hohlprofils ein Teil des Befestigungsabschnitts weggeschnitten, um zur elektrischen Kontaktierung der Elektrodendrähte ein Kopplungsglied aufsetzen zu können. Dabei stehen die beiden Elektrodendrähte über das Hohlprofil über.

Aus dem Dokument DE 10 2012 214 289 A1 ist eine elektrische Schaltleiste mit einem Schaltleistenprofil bekannt, bei der endseitig eine Endkappe aufgespritzt ist. Dabei ist zwischen dem Ende einer Verbinderschicht, welche sich längs des Schaltleistenprofils erstreckt, und der Endkappe ein Abstand vorgesehen. So soll eine Kerbwirkung verhindert werden, welche sich daraus ergeben kann, dass die Verbinderschicht aus einem anderen Material hergestellt ist als das Schaltleistenprofil.

### OFFENBARUNG DER ERFINDUNG

Die der Erfindung zugrunde liegende Aufgabe besteht demzufolge darin, ein Hohlprofil als Fingerschutzleiste zur Verfügung zu stellen, das tatsächlich im Wesentlichen über seine gesamte Länge sensibel ist, und darüber hinaus eine sichere Abdichtung der Schaltleiste erlaubt.

Zur Lösung der Aufgabe wird erfindungsgemäß vorgeschlagen, dass die Schaltleiste zumindest an einem Ende, vorzugsweise an beiden Enden, des Hohlprofils frei über das Hohlprofil übersteht. Das bedeutet, dass die Schaltleiste mit ihrem Mantel aus einem Elastomer über einen vorbestimmbaren Teil über das Hohlprofil übersteht, insbesondere kann die Schaltleiste im Bereich des überstehenden Teils umlaufend frei über das Hohlprofil überstehen. Dies kann bei der Konfektionierung des als Fingerschutzprofil ausgebildeten Hohlprofils dadurch erreicht werden, dass das Hohlprofil um den Mantel der Schaltleiste herum weggeschnitten und die Schaltleiste somit freigelegt wird.

Die Tür eines Fahrzeugs für den öffentlichen Personentransport weist ein solches als Fingerschutzprofil ausgebildetes Hohlprofil überwiegend nur an der vertikalen Schließkante der Tür auf; an den übrigen Kanten der Tür sind zur Abdichtung Rahmenprofile vorgesehen, die üblicherweise nicht als Fingerschutzprofile ausgebildet sind, also über keinen taktilen Bereich verfügen. Im jeweiligen Bereich des Übergangs von der vertikalen Schließkante zur horizontalen Schließkante kann ein Abschlussprofil vorgesehen sein, das zumindest mit der Stirnseite des Hohlprofils verbunden, z. B. verklebt ist. Alternativ kann anstelle des Abschlussprofils das Rahmenprofil unmittelbar an das Hohlprofil anschließen. Das Abschlussprofil oder das Rahmenprofil sind zumindest in Bezug auf die Kammer zur Aufnahme der Schaltleiste gleich dem Hohlprofil ausgebildet.

Es hat sich allerdings herausgestellt, dass es im Übergang der vertikal ausgerichteten Schließkante zum horizontalen Bereich der Türkante sinnvoll ist, einen taktilen Bereich durch die Schaltleiste vorzusehen. Dadurch, dass die Schaltleiste mit einer bestimmten Länge über das als Fingerschutzprofil ausgebildete Hohlprofil übersteht, besteht nunmehr die Möglichkeit, die Schaltleiste mit ihrem überstehenden Ende in das Abschlussprofil oder das Rahmenprofil bzw. eine darin jeweils vorgesehene Schaltleistenkammer einzuschieben. Hierdurch erreicht man, wie bereits ausgeführt, dass auch der Übergang von dem vertikalen Bereich der Schließkante bis in die horizontale Kante der Tür taktil ausgebildet werden kann. Selbst wenn im Übergangsbereich von dem Hohlprofil zu dem Abschluss- oder Rahmenprofil kein dichter Anschluss zwischen den Profilen erreicht wird, wird hierdurch nicht die Abdichtung der Schaltleiste beeinträchtigt, da sich der Mantel der Schaltleiste fortlaufend über diese erstreckt und insbesondere auch in dem Übergangsbereich nicht unterbrochen ist.

Vorteilhafte Merkmale und Ausgestaltungen der Erfindung ergeben sich aus den Unteransprüchen.

So ist insbesondere vorgesehen, dass zur Konfektionierung des Hohlprofils als Fingerschutzprofil die stromführenden Litzen der Schaltleiste im Bereich ihres überstehenden Endes mit einem Endwiderstand verbunden sind.

In diesem Zusammenhang ist insbesondere des Weiteren vorgesehen, dass die stromführenden Litzen im Bereich des Endwiderstands durch ein mit dem Mantel der Schaltleiste stoffschlüssig verbindbares Endstück zumindest feuchtigkeitsdicht isoliert sind. Dies wird z. B. durch einen Stopfen erreicht, der im Bereich der stromführenden Litzen den Mantel der Schaltleiste verschließt und entweder im Wege der Vulkanisation mit dem Mantel der Schaltleiste, der aus einem Elastomer besteht, verbunden oder mit diesem verklebt ist.

Nach einem weiteren Merkmal der Erfindung ist vorgesehen, dass die stromführenden Litzen der Schaltleiste im Bereich ihres überstehenden Endes mit einem Anschlusskabel versehen sind, wobei das Anschlusskabel z. B. mit dem elektrischen Antrieb für die Tür in Verbindung steht. Auch die stromführenden Litzen der Schaltleiste im Bereich ihrer Verbindung mit dem Anschlusskabel sind vorzugsweise zumindest feuchtigkeitsdicht isoliert. Dies kann durch eine Kappe erfolgen, durch die der Übergang zwischen dem Mantel der Schaltleiste einerseits und den Kabeln der Litzen andererseits gegen eindringende Feuchtigkeit isoliert ist.

Das Hohlprofil ist vorzugsweise integral mit der Schaltleiste ausgebildet, d. h. die Schaltleiste und das Hohlprofil sind als ein Bauteil ausgebildet. Eine besonders vorteilhafte und preiswerte Herstellung eines Hohlprofils mit einer einen Mantel aufweisenden Schaltleiste kann im Wege der Koextrusion erfolgen. Das heißt, die Herstellung des Hohlprofils zur Bildung eines Fingerschutzprofiles mit einer Schaltleiste kann im Zweikomponenten-Spritzgussverfahren hergestellt werden.

Gegenstand der Erfindung ist ebenfalls ein Verfahren zur Herstellung eines Fingerschutzprofiles mit einem elastisch nachgiebigen Hohlprofil aus einem Elastomer, mit einer in einer Kammer des Hohlprofils angeordneten, elektrisch arbeitenden einen Mantel aus einem Elastomer aufweisenden Schaltleiste, wobei die Herstellung eines solchen Fingerschutzprofiles mindestens die folgenden Arbeitsschritte umfasst:
1. Koextrusion des Hohlprofils zusammen mit der Schaltleiste;
2. umlaufendes Freischneiden des Mantels der Schaltleiste zur Bildung eines frei über das Hohlprofil überstehenden ersten und/oder zweiten Endes der Schaltleiste;
3. Konfektionieren der Schaltleiste am ersten und/oder zweiten Ende der Schaltleiste zur Bildung eines Fingerschutzprofiles.

Hieraus wird deutlich, dass nach der Koextrusion des Hohlprofils zusammen mit dem Mantel der Schaltleiste, das Hohlprofil über einen bestimmten Teil seiner Länge, bevorzugt an beiden Enden, um den Mantel der Schaltleiste umlaufend freigeschnitten wird, sodass schlussendlich nur noch die Schaltleiste mit ihrem Mantel an einem oder beiden Enden des Hohlprofils über das Hohlprofil übersteht. Im Anschluss hieran wird die Schaltleiste mit dem überstehenden ersten und/oder zweiten Ende zur Bildung des Fingerschutzprofiles konfektioniert. Das heißt, dass vorteilhaft die stromführenden Litzen der Schaltleiste im Bereich ihres ersten Endes zur Verbindung mit einem Endwiderstand freigelegt werden, wobei anschließend zweckmäßig ein Isolieren der stromführenden Litzen im Bereich des Endwiderstandes durch ein mit dem Mantel der Schaltleiste stoffschlüssig verbundenes Endstück erfolgt.

Des Weiteren kann vorgesehen sein, dass die stromführenden Litzen der Schaltleiste im Bereich ihres zweiten Endes mit einem Anschlusskabel verbunden werden, wobei vorteilhaft eine feuchtigkeitsdichte Isolierung der stromführenden Litzen der Schaltleiste im Bereich ihrer Verbindung mit dem Anschlusskabel durch eine Kappe erfolgt.

Gegenstand der Erfindung ist darüber hinaus die Verwendung eines erfindungsgemäßen elastisch nachgiebigen Hohlprofils mit einer in einer Kammer des Hohlprofils angeordneten elektrisch arbeitenden Schaltleiste, wobei erfindungsgemäß vorgesehen ist, dass die Anordnung des Hohlprofils in einem Rahmen oder Rahmenabschnitt einer Tür, insbesondere einer Schiebetür zur Bildung eines Fingerschutzprofiles erfolgt. Die Tür, insbesondere die Schiebetür kann hierbei Teil eines Fahrzeugs für den öffentlichen Personentransport, z. B. Teil eines Busses oder Schienenfahrzeugs sein.

Hinsichtlich bevorzugter Ausführungsformen der erfindungsgemäßen Verwendung gelten die Ausführungen zu dem erfindungsgemäßen Hohlprofil mit der Schaltleiste sowie zu dem erfindungsgemäßen Verfahren entsprechend.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einer Hohlkammer die Rede ist, so ist dies so zu verstehen, dass genau eine Hohlkammer, zwei Hohlkammern oder mehrere Hohlkammern vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: zeigt eine isometrische Darstellung eines Hohlprofils mit einer in einer Kammer des Hohlprofils angeordneten Schaltleiste, die zu beiden Enden über das Hohlprofil übersteht.
- Figur 2: zeigt einen Schnitt durch das Hohlprofil mit der Schaltleiste.
- Figuren 3a-3g: zeigen jeweils Arbeitsschritte zur Konfektionierung eines Hohlprofils sowie einer Schaltleiste an ihrem ersten Ende, an dem Litzen der Schaltleiste durch einen Endwiderstand verbunden sind.
- Figuren 4a-4g: zeigen das zweite Ende der Schaltleiste, wobei hier die Litzen der Schaltleiste mit einem Kabel zur Verbindung mit einer Motorsteuerung verbunden sind.

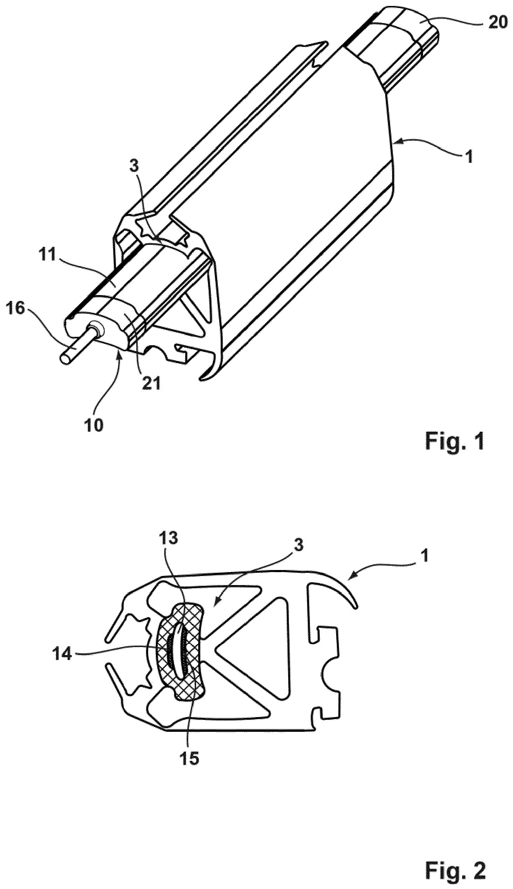

Gemäß der Figur 1 ist in einem Hohlprofil 1 eine Schaltleiste 10 aufgenommen bzw. integral mit diesem ausgebildet, wobei sich die Schaltleiste 10 durch eine Kammer 3 des Hohlprofils 1 erstreckt und an beiden Enden des Hohlprofils 1 über dieses frei übersteht. Die Schaltleiste 10 weist, wie sich dies aus der Schnittdarstellung gemäß Figur 2 ergibt, einen Mantel 11 aus einem Elastomer auf, wobei sich in dem Mantel 11 ein Hohlraum 13 befindet, In dem Hohlraum 13 sind beabstandet zueinander zwei elektrisch leitfähige Kontaktkissen 14, 15 vorgesehen, die jeweils eine Stromlitze (nicht dargestellt) aufweisen. Bei Kontakt der beiden elektrisch leitenden Kontaktkissen wird ein Signal an die Motorsteuerung zum Öffnen der Tür generiert.

Die Schaltleiste 10 weist an ihrem ersten Ende ein Endstück 20 auf, dass das offene Ende des Mantels 11 der Schaltleiste 10 mit dem Endwiderstand 17 feuchtigkeitsdicht abschließt. Am entgegengesetzten zweiten Ende der Schaltleiste 10 ist ein Anschlusskabel 16 vorgesehen, das mit den Litzen in den Kontaktkissen 14, 15 im Hohlraum 13 verbunden ist. Dieses Kabel 16 mit den beiden Litzen (nicht dargestellt) ist durch eine Kappe 21 feuchtigkeitsdicht mit dem Mantel 11 der Schaltleiste 10 verbunden.

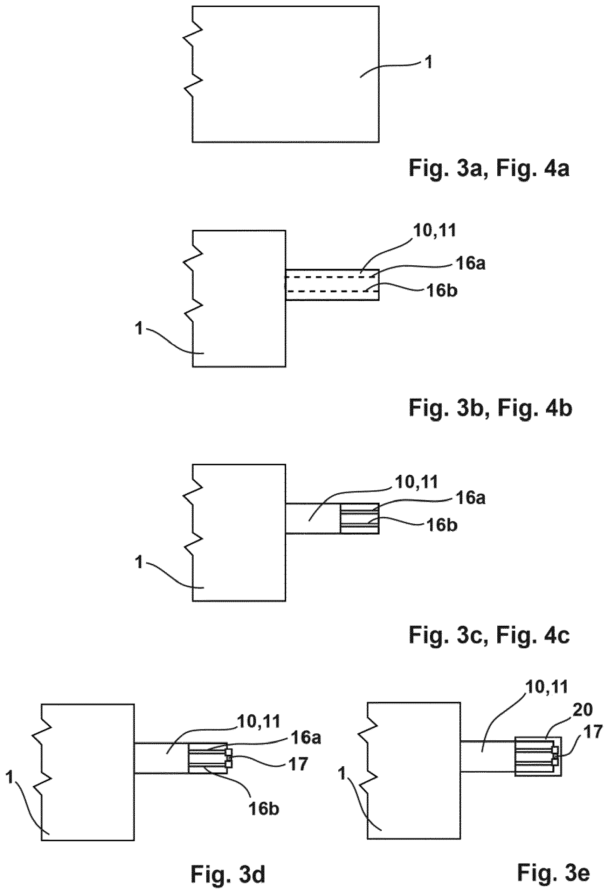

Gemäß den Figuren 3a, 4a ist das Hohlprofil mit der innenliegenden Schaltleiste (nicht dargestellt) mit 1 bezeichnet.

Wie sich aus der Fig. 3b, 4b ergibt, ist das Hohlprofil 1 im Endbereich der Schaltleiste 10 um den Mantel 11 der Schaltleiste 10 herum weggeschnitten, sodass an ihrem ersten Ende und ihrem zweiten Ende ein Überstand über das Hohlprofil 1 ergibt.

Die Figuren 3c und 4c zeigen das Freilegen der beiden Litzen 16a, 16b der Schaltleiste 10, wobei die Litzen 16a, 16b im Bereich des ersten Endes der Schaltleiste 10durch einen Endwiderstand 17 miteinander verbunden sind (Fig. 3d).

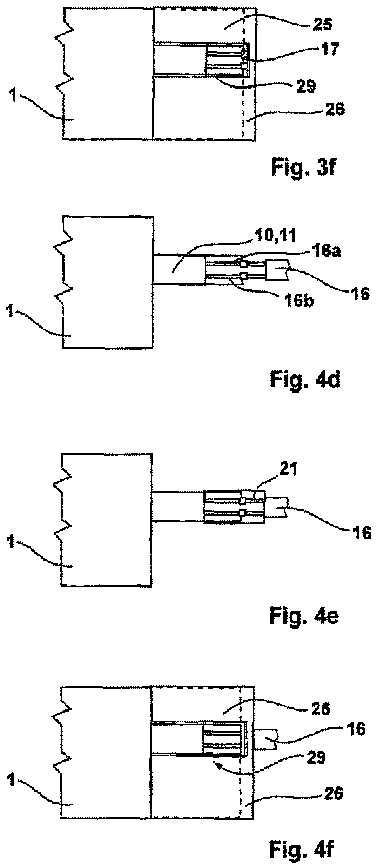

Wie sich aus Fig. 4d ergibt, ist am gegenüberliegenden zweiten Ende der Schaltleiste 10 vorgesehen, dass die freiliegenden Litzen 16a, 16b der Schaltleiste 10 mit einem Kabel 16 verbunden sind. Das Kabel 16 kann insbesondere mit der Motorsteuerung für die Schiebetür verbunden sein (nicht dargestellt).

Die Figur 3e zeigt wiederum den Bereich des ersten Endes der Schaltleiste 10, wobei die beiden Litzen 16a, 16b und der Endwiderstand 17 durch ein Endstück 20, das mit dem Mantel 11 der Schaltleiste 10 feuchtigkeitsdicht verbunden ist, feuchtigkeitsdicht eingekapselt sind.

Aus der Fig. 4e ist erkennbar, dass am zweiten Ende der Schaltleiste 10 die beiden Litzen 16a, 16b durch eine Kappe 21, welche im Wege der Vulkanisation oder durch Kleben mit dem Mantel 11 der Schaltleiste 10 feuchtigkeitsdicht verbunden sind, feuchtigkeitsdicht isoliert sind.

Die Figur 3f zeigt das Hohlprofil 1 mit einem endseitig daran angeordneten Abschlussprofil 25, wobei zusätzlich ein Deckel 26 auf das Abschlussprofil 25 beispielsweise aufgeklebt ist, um das Abschlussprofil 25, das im Querschnitt ähnlich oder gleich dem Hohlprofil 1 ausgebildet sein kann, feuchtigkeitsdicht abzuschließen. Wie in Figur 4f gezeigt, ist am gegenüberliegenden Ende des Hohlprofils 1 ein ebensolches Abschlussprofil 25 vorgesehen, mit eben einem solchen Deckel 26. Das Abschlussprofil 25 besitzt eine Schaltleistenkammer 29 zur Aufnahme des frei über das Hohlprofil 1 überstehenden Endes der Schaltleiste 10.

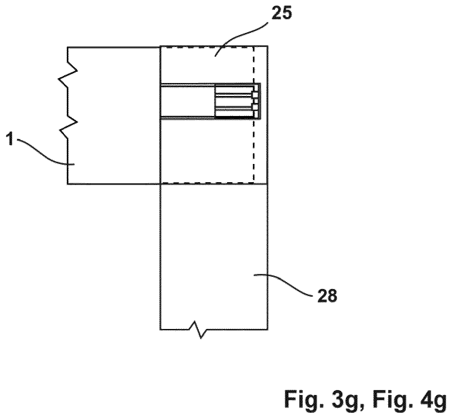

Wie sich aus den Figuren 3g und 4g ergibt, kann das Abschlussprofil 25 ein Rahmenprofil 28 aufweisen, das an das Abschlussprofil 25 mit dem Deckel 26 z. B. angespritzt oder mit diesem verklebt sein kann. Hierbei kann das Anschlusskabel 16 durch das Rahmenprofil 28 zur Motorsteuerung geführt sein (nicht dargestellt).

Beispielhaft ist in den Figuren 3g; 4g lediglich das erste Ende der Schaltleiste 10 dargestellt.

### Bezugszeichenliste:

- 1: Hohlprofil
- 3: Kammer
- 10: Schaltleiste
- 11: Mantel
- 13: Hohlraum
- 14: Kontaktkissen
- 15: Kontaktkissen
- 16: Anschlusskabel
- 16a: Litze
- 16b: Litze
- 17: Endwiderstand
- 20: Endstück
- 21: Kappe
- 25: Abschlussprofil
- 26: Deckel
- 28: Rahmenprofil
- 29: Schaltleistenkammer

## Patentansprüche

1. Elastisch nachgiebiges Hohlprofil (1) mit einer in einer Kammer (3) des Hohlprofils (1) fest integrierten, elektrisch arbeitenden, einen Mantel (11) aus einem Elastomer aufweisenden Schaltleiste (10), die bei Verformung des Hohlprofils (1) aktivierbar ist,
**dadurch gekennzeichnet, dass**
die Schaltleiste (10) an zumindest einem Ende des Hohlprofils (1) mit ihrem Mantel (11) frei über das Hohlprofil (1) übersteht.

2. Elastisch nachgiebiges Hohlprofil (1) nach Anspruch 1,
**dadurch gekennzeichnet, dass**
stromführende Litzen (16a, 16b) der Schaltleiste (10) im Bereich des überstehenden Endes mit einem Endwiderstand (17) verbunden sind.

3. Elastisch nachgiebiges Hohlprofil (1) nach Anspruch 2,
**dadurch gekennzeichnet, dass**
die stromführenden Litzen (16a, 16b) im Bereich des Endwiderstands (17) durch ein mit dem Mantel (11) der Schaltleiste (10) stoffschlüssig verbindbares Endstück (20) zumindest feuchtigkeitsdicht isoliert sind.

4. Elastisch nachgiebiges Hohlprofil (1) nach einem der vorhergehenden Ansprüche,
**dadurch gekennzeichnet, dass**
(die) stromführende(n) Litzen (16a, 16b) der Schaltleiste (10) im Bereich des überstehenden Endes mit einem Anschlusskabel (16) verbunden sind.

5. Elastisch nachgiebiges Hohlprofil (1) nach Anspruch 4,
**dadurch gekennzeichnet, dass**
die stromführenden Litzen (16a, 16b) der Schaltleiste (10) im Bereich ihrer Verbindung mit dem Anschlusskabel (16) zumindest feuchtigkeitsdicht isoliert sind.

6. Elastisch nachgiebiges Hohlprofil (1) nach einem der vorhergehenden Ansprüche,
**dadurch gekennzeichnet, dass**
das Hohlprofil (1) an seinem ersten und/oder zweiten Ende ein Abschlussprofil (25) aufweist.

7. Elastisch nachgiebiges Hohlprofil (1) nach Anspruch 6,
**dadurch gekennzeichnet, dass**
das Abschlussprofil (25) eine Schaltleistenkammer (29) aufweist, in die die Schaltleiste (10) hineinragt.

8. Elastisch nachgiebiges Hohlprofil (1) nach einem der vorhergehenden Ansprüche,
**dadurch gekennzeichnet, dass**
das Hohlprofil (1) mit der den Mantel (11) aufweisenden Schaltleiste (10) integral ausgebildet und insbesondere durch Koextrusion hergestellt ist.

9. Verfahren zur Herstellung eines Fingerschutzprofils, mit einem elastisch nachgiebigen Hohlprofil (1), nach einem der Ansprüche 1 bis 8, aus einem Elastomer mit einer in einer Kammer (3) des Hohlprofils (1) angeordneten, elektrisch arbeitenden, einen Mantel (11) aus einem Elastomer aufweisenden Schaltleiste,
wobei die Herstellung eines solchen Fingerschutzprofils mindestens die folgenden Arbeitsschritte umfasst,
- Koextrusion des Hohlprofils (1) zusammen mit der Schaltleiste (10);
- Freischneiden des Mantels (11) der Schaltleiste (10) zur Bildung eines über das Hohlprofil (1) frei überstehenden ersten und/oder zweiten Endes der Schaltleiste (10);
- Konfektionieren der Schaltleiste (10) am ersten und/oder zweiten Ende der Schaltleiste (10) zur Bildung des Fingerschutzprofils.

10. Verfahren nach Anspruch 9,
**gekennzeichnet durch**
Freilegen von stromführenden Litzen (16a, 16b) der Schaltleiste (10) im Bereich ihres ersten Endes zur Verbindung mit einem Endwiderstand (17).

11. Verfahren nach Anspruch 9 oder 10,
**gekennzeichnet durch**
Isolieren von (den) stromführenden Litzen (16a, 16b) im Bereich des Endwiderstands (17) durch ein mit dem Mantel (11) der Schaltleiste (10) stoffschlüssig verbundenes Endstück (20).

12. Verfahren nach einem der Ansprüche 9 bis 11,
**gekennzeichnet durch**
Verbinden von (den) stromführenden Litzen (16a, 16b) der Schaltleiste (10) im Bereich ihres zweiten Endes mit einem Anschlusskabel (16).

13. Verfahren nach Anspruch 12,
**gekennzeichnet durch**
feuchtigkeitsdichte Isolierung der stromführenden Litzen (16a, 16b) der Schaltleiste (10) im Bereich ihrer Verbindung mit dem Anschlusskabel (16).

14. Verwendung eines elastisch nachgiebigen Hohlprofils (1) mit einer in einer Kammer (3) des Hohlprofils (1) angeordneten, elektrisch arbeitenden Schaltleiste (10) gemäß einem oder mehreren der voranstehenden Ansprüche 1 bis 8,
**gekennzeichnet durch**
die Anordnung des Hohlprofils (1) in einem Rahmen oder einem Rahmenabschnitt einer Tür, insbesondere einer Schiebetür, zur Bildung eines Fingerschutzprofils.

15. Verwendung eines elastisch nachgiebigen Hohlprofils (1) mit der in der Kammer (3) angeordneten Schaltleiste (10) nach Anspruch 14,
**dadurch gekennzeichnet, dass**
die Tür, insbesondere die Schiebetür Teil eines Fahrzeugs für den Personentransport, z. B. Teil eines Busses oder eines Schienenfahrzeugs, ist.

## Claims

1. Elastically flexible hollow profile (1), having an electrically operating switching strip (10) which is firmly integrated in a chamber (3) of the hollow profile (1), and having a sheath (11) made of an elastomer, which can be activated when the hollow profile (1) is deformed,
**characterized in that**
the switching strip (10), with its sheath (11), projects freely beyond the hollow profile (1) at at least one end of the hollow profile (1).

2. Elastically flexible hollow profile (1) according to claim 1,
**characterized in that**
current-carrying strands (16a, 16b) of the switching strip (10) are connected to an end resistor (17) in the region of the projecting end.

3. Elastically flexible hollow profile (1) according to claim 2,
**characterized in that**
the current-carrying strands (16a, 16b) are insulated in the region of the end resistor (17) so as to be at least moisture-proof by an end piece (20) which can be integrally bonded to the sheath (11) of the switching strip (10).

4. Elastically flexible hollow profile (1) according to any of the preceding claims,
**characterized in that**
(the) current-carrying strand(s) (16a, 16b) of the switching strip (10) are connected to a connection cable (16) in the region of the protruding end.

5. Elastically flexible hollow profile (1) according to claim 4,
**characterized in that**
the current-carrying strands (16a, 16b) of the switching strip (10) are insulated in the region of their connection to the connecting cable (16) so as to be at least moisture-proof.

6. Elastically flexible hollow profile (1) according to any of the preceding claims,
**characterized in that**
the hollow profile (1) has an end profile (25) at its first and/or second end.

7. Elastically flexible hollow profile (1) according to claim 6,
**characterized in that**
the end profile (25) has a switching-strip chamber (29) into which the switching strip (10) projects.

8. Elastically flexible hollow profile (1) according to any of the preceding claims,
**characterized in that**
the hollow profile (1) is integrally formed with the switching strip (10) having the sheath (11) and, in particular, is produced by coextrusion.

9. Method for producing a finger protection profile, having an elastically flexible hollow profile (1) according to any of claims 1-8, made of an elastomer having an electrically operating switching strip arranged in a chamber (3) of the hollow profile (1) and having a sheath (11) made of an elastomer, wherein the production of such a finger protection profile comprises at least the following working steps,
- coextrusion of the hollow profile (1) together with the switching strip (10),
- cutting free the sheath (11) of the switching strip (10) to form a first and/or second end of the switching strip (10) which projects freely beyond the hollow profile (1),
- assembling the switching strip (10) at the first and/or second end of the switching strip (10) to form the finger protection profile.

10. Method according to claim 9,
**characterized by**
exposure of current-carrying strands (16a, 16b) of the switching strip (10) in the region of its first end for connection to an end resistor (17).

11. Method according to claim 9 or 10,
**characterized by**
insulation of (the) current-carrying strands (16a, 16b) in the region of the end resistor (17) by means of an end piece (20) integrally bonded to the sheath (11) of the switching strip (10).

12. Method according to any of claims 9 to 11,
**characterized by**
connection of (the) current-carrying strands (16a, 16b) of the switching strip (10) in the region of its second end to a connection cable (16).

13. Method according to claim 12,
**characterized by**
moisture-proof insulation of the current-carrying strands (16a, 16b) of the switching strip (10) in the region of their connection to the connection cable (16).

14. Use of an elastically flexible hollow profile (1) having an electrically operating switching strip (10) arranged in a chamber (3) of the hollow profile (1) according to one or more of the preceding claims 1 to 8,
**characterized by**
the arrangement of the hollow profile (1) in a frame or a frame portion of a door, in particular a sliding door, to form a finger protection profile.

15. Use of an elastically flexible hollow profile (1) having the switching strip (10) arranged in the chamber (3) according to claim 14,
**characterized in that**
the door, in particular the sliding door, is part of a vehicle for transporting passengers, e.g. part of a bus or a rail vehicle.

## Revendications

1. Profilé creux (1) élastiquement souple, comportant un bord sensible (10) intégré de manière fixe dans une chambre (3) du profilé creux (1), fonctionnant électriquement et présentant une gaine (11) en un élastomère, lequel bord sensible peut être activé lors de la déformation du profilé creux (1),
**caractérisé en ce que**
le bord sensible (10) fait librement saillie, avec sa gaine (11), au-delà du profilé creux (1) au niveau d'au moins une extrémité du profilé creux (1).

2. Profilé creux (1) élastiquement souple selon la revendication 1,
**caractérisé en ce que**
des torons conducteurs de courant (16a, 16b) du bord sensible (10) sont connectés à une résistance d'extrémité (17) dans la zone de l'extrémité faisant saillie.

3. Profilé creux (1) élastiquement souple selon la revendication 2,
**caractérisé en ce que**
les torons conducteurs de courant (16a, 16b) sont isolés, au moins de manière étanche à l'humidité, dans la zone de la résistance d'extrémité (17), par une pièce d'extrémité (20) pouvant être reliée par liaison de matière à la gaine (11) du bord sensible (10).

4. Profilé creux (1) élastiquement souple selon l'une des revendications précédentes,
**caractérisé en ce que**
le ou les torons conducteurs de courant (16a, 16b) du bord sensible (10) sont connectés à un câble de raccordement (16) dans la zone de l'extrémité faisant saillie.

5. Profilé creux (1) élastiquement souple selon la revendication 4,
**caractérisé en ce que**
les torons conducteurs de courant (16a, 16b) du bord sensible (10) sont isolés, au moins de manière étanche à l'humidité, dans la zone de la connexion desdits torons au câble de raccordement (16).

6. Profilé creux (1) élastiquement souple selon l'une des revendications précédentes,
**caractérisé en ce que**
le profilé creux (1) présente, au niveau de sa première et/ou de sa seconde extrémité, un profilé de fermeture (25).

7. Profilé creux (1) élastiquement souple selon la revendication 6,
**caractérisé en ce que**
le profilé de fermeture (25) présente une chambre pour bord sensible (29) dans laquelle le bord sensible (10) pénètre.

8. Profilé creux (1) élastiquement souple selon l'une des revendications précédentes,
**caractérisé en ce que**
le profilé creux (1) est réalisé d'un seul tenant, et est en particulier fabriqué par coextrusion, avec le bord sensible (10) présentant la gaine (11).

9. Procédé permettant la fabrication d'un profilé de protection des doigts, comportant un profilé creux (1) élastiquement souple selon l'une des revendications 1 à 8, en un élastomère, comportant un bord sensible disposé dans une chambre (3) du profilé creux (1), fonctionnant électriquement et présentant une gaine (11) en un élastomère, dans lequel la fabrication d'un tel profilé de protection des doigts comprend au moins les étapes de travail suivantes,
- coextrusion du profilé creux (1) conjointement avec le bord sensible (10) ;
- découpe de la gaine (11) du bord sensible (10) pour la formation d'une première et/ou d'une seconde extrémité du bord sensible (10) faisant librement saillie au-delà du profilé creux (1) ;
- confection du bord sensible (10) au niveau de la première et/ou de la seconde extrémité du bord sensible (10) pour la formation du profilé de protection des doigts.

10. Procédé selon la revendication 9,
**caractérisé par**
le fait de dénuder des torons conducteurs de courant (16a, 16b) du bord sensible (10) dans la zone de la première extrémité dudit bord sensible pour la connexion à une résistance d'extrémité (17).

11. Procédé selon la revendication 9 ou 10,
**caractérisé par**
l'isolation du ou des torons conducteurs de courant (16a, 16b), dans la zone de la résistance d'extrémité (17), par une pièce d'extrémité (20) reliée par liaison de matière à la gaine (11) du bord sensible (10).

12. Procédé selon l'une des revendications 9 à 11,
**caractérisé par**
la connexion du ou des torons conducteurs de courant (16a, 16b) du bord sensible (10), dans la zone de la seconde extrémité dudit bord sensible, à un câble de raccordement (16).

13. Procédé selon la revendication 12,
**caractérisé par**
l'isolation de manière étanche à l'humidité des torons conducteurs de courant (16a, 16b) du bord sensible (10) dans la zone de la connexion desdits torons au câble de raccordement (16).

14. Utilisation d'un profilé creux (1) élastiquement souple comportant un bord sensible (10) disposé dans une chambre (3) du profilé creux (1) et fonctionnant électriquement selon l'une ou plusieurs des revendications précédentes 1 à 8,
**caractérisée par**
la disposition du profilé creux (1) dans un cadre ou une section de cadre d'une porte, en particulier d'une porte coulissante, pour la formation d'un profilé de protection des doigts.

15. Utilisation d'un profilé creux (1) élastiquement souple comportant le bord sensible (10) disposé dans la chambre (3) selon la revendication 14,
**caractérisée en ce que**
la porte, en particulier la porte coulissante, fait partie d'un véhicule destiné au transport de personnes, par exemple fait partie d'un bus ou d'un véhicule ferroviaire.
